# EUROPÄISCHE PATENTSCHRIFT

(11) **EP 2 265 548 B1**
(45) Veröffentlichungstag und Bekanntmachung des Hinweises auf die Patenterteilung: **27.02.2013**
(21) Anmeldenummer: 09742013.7
(22) Anmeldetag: 29.04.2009
(51) Int. Cl.: C01B 33/107, C01F 7/48

(54) **VERFAHREN ZUR HYDROLYSE VON METALLSALZEN MIT EMULSIONEN**
METHOD FOR HYDROLYZING METALLIC SALTS WITH EMULSIONS
PROCÉDÉ D'HYDROLYSE DE SELS MÉTALLIQUES À L'AIDE D'ÉMULSIONS

(30) Priorität: 06.05.2008 DE 102008001576
(43) Veröffentlichungstag der Anmeldung: 29.12.2010
(73) Patentinhaber: Wacker Chemie AG, 81737 München (DE)
(72) Erfinder: STEPP, Michael, A-5122 Überackern (AT); PÄTZOLD, Uwe, 84489 Burghausen (DE); SCHIERLINGER, Christian, 84387 Julbach (DE)
(74) Vertreter: Killinger, Andreas
(86) Internationale Anmeldenummer: PCT/EP2009/055217
(87) Internationale Veröffentlichungsnummer: WO 2009/135795

(56) Entgegenhaltungen:
- EP-A- 0 527 309
- EP-A- 1 174 388
- DE-A1- 3 211 128
- DE-C1- 3 642 285
- GB-A- 666 617
- GB-A- 2 139 262
- US-A- 3 848 059

## Beschreibung

Die Erfindung betrifft ein Verfahren zur Hydrolyse von hydrolysierbaren Metallsalzen mit Emulsionen aus Wasser und inerter Flüssigkeit.

Bei der Umsetzung von Chlorsilanen aus metallurgischem Silicium und HCl-Gas zu Trichlorsilan (TCS) und Siliciumtetrachlorid (STC), die beispielsweise als Rohstoffe zur Erzeugung von halbleiterreinem Silicium, Solarsilicium sowie hochdisperser Kieselsäure dienen, bilden sich als Nebenprodukte Metallsalze, hauptsächlich Metallchloride. Insbesondere Aluminiumchlorid und Eisenchlorid scheiden sich beim Abkühlen des Reaktionsgemisches als Feststoff ab. Eine gezielte Abscheidung der Feststoffe ist verfahrenstechnisch wichtig, um Verlegungen bei der destillativen Aufarbeitung der flüssigen Silane zu vermeiden. Zur Abtrennung der festen Metallchloride aus dem Prozess sind verschiedene Verfahren bekannt.

In DE 2623290 A1 ist die Abscheidung von AlCl₃, vermischt mit FeCl₃ aus dem gasförmigen Reaktionsgemisch von Chlorsilanen in Liebig-Rohren beschrieben. Nicht beschrieben ist die Reinigung der Liebigrohre.

Da es sich bei den Feststoffen i.d.R. um Gemische an hochkorrosiven Verbindungen handelt, wird die unmittelbar anschließende Hydrolyse und gegebenenfalls Neutralisation der entstehenden wässrigen Lösungen einer Aufreinigung der Feststoffe (für eine Verwertung) vorgezogen. Bei der Hydrolyse der wasserfreien Metallchloride (insbesondere des Hauptbestandteils Aluminiumchlorid) wird bekanntermaßen eine sehr hohe Wärmemenge frei, die bei unzureichender Wärmeabfuhr zum Verdampfen des Wassers und in Folge zu unkontrolliertem Druckaufbau und damit zu gefährlichen Anlagenzuständen bis hin zur Explosion führen kann.

Aus Sicherheitsgründen werden deshalb Apparate und Anlagenteile, die mit diesen Metallchloriden kontaminiert sind, zur Reingung durch Hydrolyse ausgebaut. Dies verursacht neben der Unfallgefahr bei Anlagenöffnung und Transport der verunreinigten Apparate einen hohen logistischen Aufwand, um Ausfallzeiten zu vermeiden. Die damit verbundenen Sicherheitsrisiken sowie der Kostenaufwand sind erheblich.

Als Alternative ist beispielsweise in EP 1174388 A1 ein Verfahren beschrieben, bei dem die Metallchloride nach Fällung in einer Quenche aufwändig abfiltriert und damit in verwertbarer Form isoliert werden. Da es sich aber i.d.R. um Gemische an Metallchloriden handelt, ist auch hierbei die Hydrolyse und anschließende Entsorgung über eine Abwasserreinigungsanlage wirtschaftlich vorteilhafter als eine weitere aufwändige Aufreinigung. Die Hydrolyse lässt sich dann über die Dosiergeschwindigkeit des Filterkuchens steuern.

Es bestand die Aufgabe, feste hydrolysierbare Metallsalze auf einfache und gefahrlose Weise zu hydrolysieren.

Gegenstand der Erfindung ist ein Verfahren zur Abreinigung von Metallsalzbelägen an Anlagenteilen im eingebauten Zustand durch Hydrolyse von hydrolysierbaren Metallsalzen, bei dem die Metallsalze mit Emulsionen aus a) Wasser und b) inerter Flüssigkeit umgesetzt werden, gekennezeichnet durch die Merkmale des Anspruchs 1.

Mit dem erfindungsgemäßen Verfahren kann die Hydrolysereaktion kontrolliert durchgeführt werden. Durch den Einsatz von wässrigen Emulsionen lässt sich die Wärmefreisetzung bei der Hydrolyse der Metallsalze verzögern. Es ist damit eine sichere und kostengünstige kontinuierliche Abreinigung von Metallsalzbelägen an Anlagenteilen im eingebauten Zustand möglich.

Bei der Hydrolyse wird vorzugsweise eine Emulsion von Wasser in einer inerten Flüssigkeit mit der festen Oberfläche des Belages solange in Kontakt gebracht, bis der gewünschte Reinigungseffekt erzielt ist. Dies hat folgende Vorteile gegenüber der direkten Umsetzung mit Wasser:
Aufgrund der Tröpfchenstruktur des Wassers ist die reaktive Oberfläche verringert. Die exotherme Hydrolyse findet dann deutlich langsamer statt. Über den Anteil des Wassers in der Emulsion kann die Reaktionsgeschwindigkeit an die Wärmeabfuhr angepasst werden. Durch Brechen der Emulsion nach der Umsetzung kann die inerte Flüssigkeit von der wässrigen, mit Hydrolyseprodukten angereicherten wässrigen Phase abgetrennt und somit zurückgewonnen werden. Dies prädestiniert das erfindungsgemäße Verfahren für eine kontinuierliche Fahrweise.

Besonders geeignet ist das Verfahren zur Beseitigung von an Oberflächen anhaftenden Metallsalzen. Beispielsweise können Apparate, wie Liebig-Rohre von anhaftenden Metallsalzen befreit werden, indem eine wässrige Emulsion so lange durchgeleitet wird, bis der gewünschte Umsatz erreicht ist. Die vollständige Abreinigung kann mit Hilfe eines Indikators (z.B. pH-Elektrode, Temperaturmessung, elektrische Leitfähigkeitsmessung, thermische Leitfähigkeitsmessung, Brechungsindexbestimmung, Dichtemessung) direkt an der ausströmenden Emulsion bzw. an der bereits abgetrennten wässrigen Phase nachgewiesen werden, sodass der Vorgang auch einfach automatisiert werden kann.

Die optimale Konzentration von Wasser in der Emulsion kann durch einfache Vorversuche bestimmt werden, wobei man insbesondere bei stark exothermen Hydrolysevorgängen üblicherweise mit einer niedrigen Wasserkonzentration beginnt, um unerwünschte Überhitzung zu vermeiden. Es ist auch möglich, bei bekannter Reaktionsenthalpie, Wärmeabfuhr sowie Wärmekapazität die optimale Mischung für einen gewünschten bzw. zulässigen Temperaturanstieg zu berechnen. Der Wasseranteil in der Emulsion ist von 10 bis 50 Gew.%, besonders bevorzugt 15 bis 35 Gew.%. Bei sehr niedrigen Konzentrationen dauert es länger, bis die Hydrolyse vollständig ist, dagegen kann es bei zu hohem Wasseranteil zu einer Destabilisierung der Emulsion und zu einem unerwünscht hohen Temperaturanstieg kommen. Es kann deshalb vorteilhaft sein, zur Stabilisierung der Emulsion einen Emulgator zuzusetzen.

Als Metallsalze kommen Halogenide von Aluminium, Eisen, Titan und Chrom in Frage, insbesondere Aluminiumchlorid und Eisenchlorid.

Bei der Hydrolyse von Aluminiumchloridbelägen aus der Silanerzeugung bilden sich salzsaure Lösungen, sodass in diesen Fällen vorzugsweise ein Emulgator verwendet wird, der im sauren Milieu chemisch stabil ist. Beispiele für solche Emulgatoren sind Sulfonsäure-, Phosphonsäure- und Polyethylenglykolderivate, die auch als Gemisch angewendet werden können. Besonders bevorzugt sind dabei Emulgatoren, die mit Aluminiumionen schwerlösliche Produkte bilden, wie Dodecylbenzolsulfonsäure, sodass - bei ausreichend hoher Konzentration - zwar eine Stabilisierung der Emulsion während des Hydrolysevorgangs aufrechterhalten wird, aber durch die Ausfällung des Emulgators eine leichtere Auftrennung der Emulsion am Ende des Prozesses ermöglicht wird. Die Konzentration an Emulgator in der Mischung beträgt üblicherweise 0,01 bis 10 Gew.%, bevorzugt 0,1 bis 2 Gew.-%, besonders bevorzugt 0,1 bis 1 Gew.%.

Als inerte Flüssigkeit sind in Wasser nur schwach lösliche Flüssigkeiten bevorzugt, die mit den Metallsalz-Belägen oder den Hydrolyseprodukten nicht unter den gewählten Bedingungen reagieren. Vorzugsweise sind die inerten Flüssigkeiten bei 10°C flüssig. Bevorzugt sind Organopolysiloxane, wie cyclische oder lineare Polydimethylsiloxane oder Kohlenwasserstoffe wie Paraffinöle, Toluol, Polyalkylbenzole. Besonders bevorzugt sind Polydimethylsiloxane, wie käuflich erhältliche lineare Polydimethylsiloxane, beispielsweise Me₃Si-O(SiMe₂O)ₘ-SiMe₃, wobei m = 10 bis 40, oder Gemische aus cyclischen (Me₂SiO)n, wobei n = 4 bis 6. Es können aber auch Mischungen aus inerten Flüssigkeiten eingesetzt werden.

Vorzugsweise weisen die inerten Flüssigkeiten bei 20°C eine Viskosität von 0,5 bis 1000 mPas, insbesondere 10 bis 50 mPas auf.

Der Emulgiervorgang wird vorzugsweise entweder durch eine in der Emulgierpraxis typische mechanische Mischvorrichtung, wie einen Dissolver oder durch eine Pumpe, die gleichzeitig als Fördersystem genutzt wird, bewerkstelligt. Die Emulsion kann entweder auf Vorrat hergestellt und in einem Behälter zwischengelagert werden oder unmittelbar vor der Anwendung frisch hergestellt werden.

Der Hydrolysevorgang kann prinzipiell bei Temperaturen von 0°C bis 100°C durchgeführt werden. Es sind jedoch auch höhere Temperaturen denkbar, sofern die Verdampfung des Wassers durch Realisierung von Überdruck verhindert wird. Übliche Praxis ist die Umsetzung bei Normaldruck im Temperaturbereich unterhalb 80°C, damit ein ausreichender Temperaturabstand zum Siedepunkt des Wassers gewährleistet ist und ein Druckaufbau verhindert werden kann.

Das Verfahren kann batchweise oder kontinuierlich gestaltet werden. Beim Batchprozess wird das zu hydrolysierende Metallsalz entweder in einem geeigneten Behälter vorgelegt und die Emulsion zugegeben oder die Emulsion vorgelegt und über eine Feststoffdosier- oder -fördereinrichtung (z.B. Förderschnecke, Feststoffschleuse) das Metallsalz kontrolliert zugefügt. Vorzugsweise wird in Produktionsanlagen das erfindungsgemäße Verfahren kontinuierlich betrieben. Die zu reinigenden Apparate (Rohrleitungen wie Liebigrohre, Behälter etc.) werden dabei möglichst im eingebauten Zustand mit der Emulsion gespült. Dazu werden sie vorzugsweise über feste Rohrleitungsverbindungen mit der Emulsionsversorgungseinrichtung verbunden. Dadurch lassen sich Emissionen in die Atmosphäre vermeiden. Das erfindungsgemäße Verfahren kann aber auch an ausgebauten Apparaten durchgeführt werden, die an eine spezielle Vorrichtung (Reinigungsstand) angeschlossen werden und mit der Emulsion durchspült werden. Der Spülvorgang wird vorzugsweise durch Förderung der Emulsion mittels Pumpe (Membranpumpe, Kreiselpumpe, Spaltrohrpumpe, Zahnradpumpe, Kolbenpumpe etc.) durchgeführt. Dies hat gegebenenfalls den Vorteil, dass Emulgier- und Fördervorgang in einem einzigen Schritt stattfinden können, sofern das Förderaggregat eine ausreichend intensive Vermischung der Komponenten ermöglicht. In diesen Fällen werden Wasser und (gegebenenfalls recyclierte) inerte Flüssigkeit und gegebenenfalls Emulgator vorzugsweise in einer Mischstrecke vereint, der Saugseite einer Pumpe zugeführt, durch die Pumpe gefördert und dabei gleichzeitig emulgiert. Die Förderung der Emulsion durch die zu reinigenden Anlagenteile kann jedoch auch durch Aufbau eines hydrostatischen Drucks z.B. mittels Hochbehälter oder durch Anlegen eines Gasdruckes (z.B. Druckluft, Stickstoff) erfolgen. In diesen Fällen muss die Emulsion jedoch entweder vorher hergestellt worden sein, oder das Dispergiersystem dem zu reinigenden Apparat vorgeschaltet werden.

Der Durchsatz der Emulsion wird vorzugsweise so gewählt, dass die Reinigung so rasch und so sicher wie möglich abläuft. Er richtet sich sowohl nach der Wasserkonzentration in der Emulsion als auch nach der Prozesstemperatur und der Stabilität der Emulsion. Die optimalen Prozessparameter können mit einfachen Vorversuchen z.B. durch Messung der Temperatur am Austritt der Spülflüssigkeit ermittelt werden. Dabei wird man vorteilhafterweise zunächst möglichst geringe Wasserkonzentrationen einsetzen, um eine unerwünschte Überhitzung zu vermeiden.

Aus wirtschaftlichen Gründen kann es vorteilhaft sein, den inerten Emulsionsbestandteil wieder zurückzugewinnen. Dazu bricht man die bei dem Reinigungsprozess anfallende Emulsion mit den üblichen Methoden (z.B. Zugabe eines Salzes, Überleiten über einen mit Glasgewebe gefüllten Abscheider/Koaleszor), trennt die wässrige Phase ab und mischt der inerten Flüssigkeit wieder Wasser und gegebenenfalls Emulgator zu.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 0,10 MPa (abs.) und einer Temperatur von 20°C durchgeführt.

### Beispiel 1: (kontinuierliches Verfahren)

In einem Versuchsstand werden Siliconöl AK35 (Polydimethylsiloxan mit einer Viskosität von 35 mPas, käuflich zu erwerben bei der Wacker Chemie AG) aus einem Vorlagegefäß und Wasser im Verhältnis 4:1 unter Zusatz von 0,5% Dodecylbenzolsulfonsäure in einer als Dissolver wirkenden Kreiselpumpe vermischt und gleichzeitig gefördert. Die resultierende Emulsion wird durch das mit 60 kg Aluminiumchlorid belegte Liebigrohr mit einem Durchsatz von 100 kg/h bis zur vollständigen Auflösung des Belages gepumpt. In einem nachgeschalteten, mit Glasgewebe gefüllten Koaleszor wird das ausströmende Gemisch in eine wässrige Phase und eine Siliconölphase getrennt. Die wässrige Phase enthält gelbliche schwammige Partikel, sie wird über einen Adsorber aus Aktivkohle zur Abwasserreinigungsanlage abgeleitet, die Siliconölphase wird zurückgeführt in das Vorlagegefäß. Die kontinuierlich aus dem Abscheider abgeleitete Abwassermenge wird permanent durch Frischwasser ersetzt. Die Umsetzung wird bei Umgebungstemperatur (18°C) durchgeführt. Das austretende Gemisch hat sich ohne Zusatzkühlung des Rohres auf 34°C erwärmt. Nach 1 Stunde und 55 Minuten ist keine pH-Wert-Differenz zwischen Zulauf und Ablauf mehr feststellbar und der Belag vollständig abgelöst. Durch 10 Minuten Nachspülen mit 1000 kg/h Wasser werden im Rohrinneren anhaftende Siliconölreste komplett entfernt, wie der Wischtest mit einem Papiertuch zeigt.

### Beispiel 2: (Batchversuch)

In einem 600 ml-Becherglas wird eine Mischung aus 109 g Wasser und 313,5 g Siliconöl AK35 vorgelegt und mit einem Dispergierstab (Ultraturrax) 20 sec emulgiert. Anschließend wird die Emulsion mit einem Flügelrührer bei 220 U/min gerührt und mit einem 14 g schweren Metallchloridbrocken aus der Chlorsilanproduktion (Aluminiumchlorid) versetzt. Die Temperatur steigt von 23°C binnen 16 Minuten auf einen Maximalwert von 44°C an und ist, nachdem sich der Feststoff nach 32 Minuten komplett gelöst hat, wieder auf 40°C abgefallen.

### Beispiel 3: (Batchversuch)

In einem 600 ml-Becherglas wird eine Mischung aus 105,3 g Wasser, 302,4 g Siliconöl AK35 und 1,5 g Malon® AS3 Säure (=Dodecylbenzolsulfonsäure) vorgelegt und mit einem Dispergierstab (Ultraturrax) 20 sec emulgiert. Anschließend wird die Emulsion mit einem Flügelrührer bei 220 U/min gerührt und mit einem 13,5 g schweren Metallchloridbrocken aus der Chlorsilanproduktion (Aluminiumchlorid) versetzt. Die Temperatur steigt von 23°C binnen 13 Minuten auf einen Maximalwert von 46°C an und ist, nachdem sich der Feststoff nach 30 Minuten komplett gelöst hat, wieder auf 39°C abgefallen.

### Vergleichsbeispiel gegenüber Beispiel 3(nicht erfindungsgemäss):

In einem 600 ml-Becherglas werden 196,6 g Wasser vorgelegt. Unter Rühren mit dem Flügelrührer bei 220 U/min wird ein 12,6 g schwerer Metallchloridbrocken aus der Chlorsilanproduktion (Aluminiumchlorid) zugegeben. Die Temperatur steigt von 23°C binnen 30 Sekunden auf einen Maximalwert von 54°C an und ist, bis sich der Feststoff nach 1 Minute komplett gelöst hat, wieder auf 53°C abgefallen.

## Patentansprüche

1. Verfahren zur Abreinigung von McLallsalzbelägen an Anlagenteilen im eingebauten Zustand durch Hydrolyse der hydrolysierbaren Metallsalze, die ausgewählt werden aus Halogeniden von Aluminium, Eisen, Titan und Chrom, bei dem die Metallsalze mit Emulsionen aus a) Wasser und b) inerter Flüssigkeit, die ausgewählt wird aus Organopolysiloxanen, Kohlenwasserstoffen und deren Gemischen, umgesetzt werden, wobei der Wasseranteil der verwendeten Emulsion 10 bis 50 Gew.% beträgt und die verwendete Emulsion die Wärmefreisetzung bei der IIydrolyse der Matallsalze verzögert.

2. Verfahren nach Anspruch 1, bei dem das Metallsalz Aluminiumchlorid ist.

3. Verfahren nach Anspruch 1 oder 2, bei dem die inerten Flüssigkeiten bei 20°C eine Viskosität von 0, 5 bis 1000 mPas aufweisen.

## Claims

1. Method for cleaning off metallic salt coatings on plant components in the installed state by hydrolyzing the hydrolyzable metallic salts, which are selected from halides of aluminium, iron, titanium and chromium, in which the metallic salts are reacted with emulsions of a) water and b) inert liquid, which is selected from organopolysiloxanes, hydrocarbons and their mixtures, wherein the proportion of water in the emulsion used is 10 to 50% by weight and the emulsion used delays the release of heat in the hydrolysis of the metallic salts.

2. Method according to Claim 1, in which the metallic salt is aluminium chloride.

3. Method according to Claim 1 or 2, in which the inert liquids have a viscosity of 0.5 to 1000 mPas at 20°C.

## Revendications

1. Procédé pour l'élimination de dépôts de sels métalliques sur des éléments d'installations à l'état monté, par hydrolyse des sels métalliques hydrolysables, qui sont choisis parmi des halogénures d'aluminium, de fer, de titane et de chrome, dans lequel on fait réagir les sels métalliques avec des émulsions a) d'eau et b) d'un liquide inerte qui est choisi parmi des organopolysiloxanes, des hydrocarbures et des mélanges de ceux-ci, la teneur en eau de l'émulsion utilisée valant de 10 à 50 % en poids et l'émulsion utilisée ralentissant le dégagement de chaleur lors de l'hydrolyse des sels métalliques.

2. Procédé selon la revendication 1, dans lequel le sel métallique est le chlorure d'aluminium.

3. Procédé selon la revendication 1 ou 2, dans lequel les liquides inertes présentent à 20 °C une viscosité de 0,5 à 1 000 mPa.s.
